# EUROPEAN PATENT APPLICATION

(11) **EP 3 521 388 A1**
(43) Date of publication of application: **07.08.2019**
(21) Application number: 17854276.7
(22) Date of filing: 28.09.2017
(51) Int. Cl.: C09D 103/02, B32B 29/00

(54) **WATERPROOFING COMPOSITION FOR CELLULOSIC SUBSTRATES, PROCESS FOR PREPARING A WATERPROOFING COMPOSITION, PROCESS FOR APPLYING A WATERPROOFING COMPOSITION, USE OF THE WATERPROOFING COMPOSITION, AND PRODUCT**

(30) Priority: 30.09.2016 BR 102016022900; 27.09.2017 BR 102017020684
(71) Applicant: Fittipaldi, Maria Izabel Magalhães Viana, CEP 18108-001 Sorocaba/SP (BR)
(72) Inventor: Fittipaldi, Maria Izabel Magalhães Viana, CEP 18108-001 Sorocaba/SP (BR)
(74) Representative: KATZAROV S.A.
(86) International application number: PCT/BR2017/050289
(87) International publication number: WO 2018/058224

(57) **Abstract**

The present invention refers to a waterproofing composition with enhanced barrier characteristics, particularly for coating cellulosic substrates.

## Description

The present invention relates generally to a waterproofing composition having improved barrier characteristics, particularly for coating cellulosic substrates. The invention also refers to processes for the preparation of such waterproofing composition, substrates coated with such waterproofing composition, and the process of its application to the cellulosic substrates.

In the text which follows, only for ease of exposition, reference will be made specific to the embodiment of the invention in an alternative paper coating, without this entailing any limitation to the broader scope of the invention, which encompasses any cellulosic substrates, there included, for example, paper, card, cardstock, cardboard, and cellulosic films or solid of any nature.

### State of the art

Are known in the industry, particularly in the packaging industry, waterproof coatings for polymeric paper and films, in order to prevent the passage of moisture, for example, latex-based with polymers or copolymers of styrene, butadiene, acrylates, vinyl acetate and polyolefins dispersed in water. These compositions also contain various types of additives to improve their homogeneity, durability and applicability.

In certain applications the impermeability has to be very efficient, and the typical solution has been to build composite materials, with multiple layers including paper, metallized film and polymeric blades of varying natures.

In other situations, high waterproof thin materials are required, in which case aluminum films are used.

This context of technology shows that the improvement of impermeability in general goes hand in hand with higher costs, either by the material itself or by the way it is prepared.

Surprisingly, a high-performance waterproofing composition has been developed as to the impermeability obtained for cellulosic substrates that results in a low-cost material, and that allows the advantageous replacement of more expensive materials or more complex manufacturing.

As state of the art relevant to this technology area can be mentioned the U.S. patent US8734959, which discloses a paper as cellulose base, coated with a composition which contains a biopolymer (such as starch), a plasticizer (such as glycerol) and bentonite nanoparticulated. The best result obtained for the WVTR (water vapor transmission rate) is 17 g/m².24h, shown in Table 6 of that document, for a coating amount of 8 - 10 g/m².

Another document representing the state of the art for this area of technology is the patent application WO2013180643, which describes a paper coated with a composition containing starch cross-linked with citric acid, optionally in the presence of nanoclay. The best value of WVTR obtained, for a coating of 10 g/m², is of the order of 7 g/m²/24h, shown in Table 13 of that document.

### Description of the invention

The present invention, in a first aspect, refers to a waterproofing composition that provides results of better waterproofing performance compared to those found in the state of the art.

It is related to a waterproofing composition characterized by comprising water, nanoclay, starch, a binder polymer, one or more polymeric performance enhancers, and a surfactant. When the polymer employed is not pre-prepared in an aqueous medium, for example, dissolved, in dispersion or in emulsion, a non-aqueous solvent is additionally used.

In the way herein employed, nanoclay refers to the natural clay, modified or formulated, with particles of nanometer size, particularly having a dimension of less than 100 nanometers, for example, montmorillonite, bentonide, smectic, kaolinite, muscovite, kanemite, revdite, grumantite, ilerite, taneolite, halloisite, rectorite, vermiculite, hectorite, stevensite, medmontite, diachite, nontronite, volkonskoite, saponite, laponite, sauconite, magadite, kaniaite, ledikite, and mixtures thereof. In particular, montmorillonite is used.

In the way herein employed, starch refers to natural starch from any source, for example, Native Starch (maize, oats, rice, wheat, barley, rye, potatoes, cassava, etc.) or chemically or enzymatically modified, or mixtures thereof. In particular, acetylated starch is used.

In the way herein employed, a binding polymer is one capable of providing physical coherence between the various components of the invention's composition. Are non-limiting examples of binder polymers: polyvinyl chloride, polyvinyl alcohol, polyamide, poly (ethylene vinyl acetate), polyvinyl butyral, vinyl polyacrylate and polylactic acid.

In the way herein employed, non-aqueous solvent is one capable of solubilizing a binder polymer not pre-prepared in water. The definition also covers mixtures of solvents with that capacity. Are non-limiting particular examples of non-aqueous solvent suitable for the invention methylethylketone (MEC), ethyl acetate, dioxolan or mixtures thereof.

In the way herein employed, polymeric performance enhancer (PPE) is any agent or mixture of agents that have an effect on polymers - in the case of the invention, the starch and binder polymer - having as end result the decrease of the porosity of the coating applied with the composition of the invention, for example, crosslinking agents or compatibilizers of the polymer with the other ingredients. Non-exhaustive examples of PPE are casein derivatives, oxidized sucrose, acetic anhydride, maleic anhydride, carboxylic acids. In particular, without excluding any other, sodium caseinate, maleic anhydride, mixtures thereof, or citric acid are used. The composition of the invention may contain several PPE within the same formulation, associated with each particular polymer.

Surfactants are known products of the person skilled in the art, used to lower the surface tension of a medium. Without excluding any other alternative, non-ionic surfactants (for example, ethoxylates alcohols), amphoteric (for example, fluoro-surfactants), or anionic (for example, lignosulfonates) are suitable.

In particular, without excluding any other, the content of the above ingredients is as mentioned in Table 1 below, when the binder polymer used is not pre-prepared in aqueous medium:

**Table 1**

| | Ingredient | % by weight (w/w) |
|---|---|---|
| 1. | Water | 4-6 |
| 2. | Nanoclay | 7-11 |
| 3. | Starch | 15-17 |
| 4. | PPE | 2-5 |
| 5. | Non-aqueous solvent | qsp 100 |
| 6. | Binding polymer | 12-17 |
| 7. | Surfactant | 0.1-3.0 |

In particular, without excluding any other, the content of the above ingredients is as mentioned in Table 2 below, when the binder polymer used is pre-prepared in aqueous medium:

**Table 2**

| | Ingredient | % by weight (w/w) |
|---|---|---|
| 1. | Water | Qsp 100 |
| 2. | Nanoclay | 1-3 |
| 3. | Starch | 10-30 |
| 4. | PPE | 1-3 |
| 5. | Binding polymer | 10-30 |
| 6. | Surfactant | 10-30 |

The formulation of the invention may optionally contain other ingredients, for example, pigments, charge, odorants, antimicrobial agent, rheological additive, etc.

Another aspect of the invention is the preparation of waterproofing composition.

Within a particular process of preparation of the waterproofing composition, when the binder polymer used is not pre-prepared in aqueous medium, the composition is prepared in three steps, which are:
- preparation of an aqueous phase (or polar phase) with nanoclay, starch and PPE;
- preparation of an apolar phase with non-aqueous solvent, binding polymer, PPE, surfactant, optionally, nanoclay;
- add the polar phase to the apolar phase and shake to achieve a single homogeneous phase.

In particular, the proportion by weight (w/w) between polar phase components and apolar phase components is 1:2.

In another particular embodiment of the process of preparation of the waterproofing composition, preparing the composition in a continuous sequence, which includes mixing the hot water with the components 2, 3 and 4 (see tables 1 and 2 above), cool to room temperature, then add the remaining components with agitation until obtaining homogeneous medium.

Another aspect of this invention concerns the process of applying the waterproofing composition to a cellulosic substrate, characterized by the fact that it is applied a substantially uniform layer of this composition to the substrate, particularly from 3 to 15 g/m², more particularly from 7 to 10 g/m² (value after drying). When the substrate is paper or card, an appropriate process of application of the composition of the invention is a continuous rotating process, for example, rotogravure or flexography, with blow drying and exhaustion or UV radiation.

Another aspect of this invention refers to the use of waterproofing composition to obtain waterproofing of cellulosic substrates, particularly paper, at WVTR values below 6 g/m².24h.

Another aspect of this invention refers to products totally or partially waterproofed with described waterproofing composition. In a particular embodiment, a product of this nature is a blister packing for tablets, known to the person skilled in the art, characterized by the fact of comprising a paper-based blister (defined here as paper coated with the composition of the invention) adhered partially to a sheet of polymer that is thermo-moldable, for example, PVC (polyvinyl chloride), PVDC (polyvinylidene chloride), PET (polyethylene terephthalate) or PCTFE (polychlorotrifluoroethylene), forming spaces between the base paper and the sheet of polymer where you can house tablets. In this blister packaging configuration, a pharmaceutical grade paper is suitable. In this blister packaging of the invention, the blister paper base replaces, with advantages of cost and equivalent performance, an aluminum film.

### Example

The following are merely illustrative examples of the embodiment of this invention, without imposing any limit on the extent of the invention as defined in the attached claims.
Example 1 - Preparation of the composition of the invention in stages, wherein the binding polymer is not pre-prepared in aqueous medium. The table below shows the content of each component used in this example.:

| | Ingredient | % by weight (w/w) |
|---|---|---|
| Polar phase | | |
| 1 | Water | 5.055 |
| 2 | Nanoclay (montmorillonite) | 8.325 |
| 3 | Acetylated starch | 16.65 |
| 4 | Sodium caseinate | 3.3 |

| Apolar phase | | |
|---|---|---|
| 5 | Dioxolane | qsp 100 |
| 6 | Polylactic acid | 15 |
| 7 | Maleic anhydride | 0.5 |
| 8 | Ethoxylate surfactant of secondary alcohol | 0.5 |

### A. Preparation of polar phase 1

First, 50 grams of nanoclay (montmorillonite) is dispersed in 1 liter of water, using the Turrax apparatus at 18,000 rpm for 60 Minutes. To that mixture is added 0.01 mg/ml of sodium caseinate. This mixture is heated to 90 °C in constant agitation for 5 minutes until it is completely dissolved. The water thus prepared is used to produce a 50% of aqueous solution of acetylated starch.

### B. Preparation of apolar phase 2

A dispersion of 200 grams of nanoclay (montmorillonite) is made into 1.5 liters of dioxolan, using the Turrax apparatus at 18,000 rpm for 60 Minutes.

The solvent thus prepared is used to produce a solution of 15% of polylactic acid (PLA). 0.5% of maleic anhydride and 0.5% of surfactant are added to the mixture, taking into account the final volume of 3 liters of product.

Shake at 50 rpm for 60 minutes at 40 °C.

### C. Obtaining the composition of the invention by mixing stages 1 and 2

Under agitation of 100 rpm, Phase 2 is slowly added to phase 1 until homogenization.
Example 2 - preparation of the composition of the invention in a single sequence, in which the binding polymer is not pre-prepared in aqueous medium. The components are those of Example 1.
1. Solubilize close to 80 -C, 5 grams of sodium caseinate in water (qsp 50 grams). Then disperse in this solution 0.25% w/w of nanoclay (montmorillonite).
2. Cool the dispersion to 25 °C.
3. Add 50 grams of acetylated starch. Shake for 30 minutes.
4. Heat that mixture to 80 °C, under agitation.
5. Cool the mixture to 25 °C
6. Add 45 g of polylactic acid, 1.5 g of amphoteric surfactant and dioxolan qsp 300 grams. Maleic anhydride has been pre-dissolved in dioxolan 0.5% w/w.
7. Shake until the polymer is completely dissolved.

### Example 3 - Application of the composition of the invention to a cellulosic substrate

The waterproofing composition obtained in Example 1 is applied, with the use of a blow-drying and exhaustion flexographic machine, as a layer of final weight 6 g/m² (value after drying), to a pharmaceutical paper of long fiber of weight 40 g/m².

### Example 4 - Preparation of a product using the coated substrate of the invention.

In a blasting machine aimed at making aluminum blister, the aluminum film is replaced by the paper obtained in Example 3, the paper is then adhered to a thermoforming PVC film with 6 to 8 g/m² of Liofol HS 6145 thermo-sealant, marketed by the Henkel company.

The paper coated with the waterproofing composition, according to the invention has a WVTR of 0.4 g/m².24h, at 75% of relative humidity and 45 °C, in the measurement performed according to ASTM-E-96 (based on the norm ISO 2528:1995 - "Determination of WVTR by gravimetric process").
Example 5 - Preparing the composition of the invention in a single sequence - in which the binding polymer is pre-prepared on an aqueous basis.

The table below shows the content of each component used in this example.

| | Ingredient | % by weight (w/w) | Weight (g) |
|---|---|---|---|
| 1. | Water | 21.50 | 86 |
| 2. | Nanoclay | 1.0 | 4 |
| 3. | Acetylated starch | 25 | 100 |
| 4. | Citric acid | 2.5 | 10 |
| 5. | Vinyl polyacrylate (polymer contained in emulsion 60% aqueous) | 25 | 100 |
| 6. | Calcium lignosulfonate | 25 | 100 |

- Hot solubilizing (80 °C) 100 grams of acetylated starch in water (86 g).
- Then disperse in this solution 4 g of nanoclay (montmorillonite) - 15,000 rpm per 15 min.
- Cool the mixture to 25 °C
- Under constant agitation add 100 g of vinyl polyacrylate, 10 g of citric acid and 100 g of calcium lignosulfonate.
- Maintain agitation until complete dissolution.

Example 6 - Test bodies were prepared with the waterproofing composition of example 5 on pharmaceutical grade long fiber paper, weight of 45 g/m² size A4, with manual application of the waterproofing composition with 30 µm extender bar. The test bodies then passed through drying in conventional greenhouse at 90 °C for 15 minutes. The water vapor permeability measurement is performed according to norm ASTM-e-96 (based on norm ISO 2528:1995 - "Determination of WVTR by gravimetric process"). The result obtained was WVTR of 2.77 g/m².24h, with 99% of relative humidity and 45 °C.

It is known that a person skilled in the art, based on the information and examples contained in this document can make embodiments specific to the invention not expressly described, but which perform the same or similar jobs, to achieve result of the same nature. Such equivalent embodiments are covered by the attached claims.

## Claims

1. Waterproofing composition of cellulosic substrates, **characterized by** comprising water, nanoclay, starch, binder polymer not pre-prepared in aqueous medium, one or more polymeric performance enhancers, non-aqueous solvent and surfactant.

2. Waterproofing composition of cellulosic substrates, **characterized by** comprising water, nanoclay, starch, binder polymer pre-prepared in aqueous medium, one or more polymeric performance enhancers and surfactant.

3. Waterproofing composition, according to any of claims 1 or 2, **characterized by** the fact that the nanoclay is chosen from among montmorillonite, bentonide, smectic, kaolinite, muscovite, kanemite, revdite, grumantite, ilerite, taneolite, halloysite, rectorite, vermiculite, hectorite, stevensite, medmontite, diachite, nontronite, bekonite, volkonskoite, saponite, laponite, sauconite, magadite, kaniaite, ledikite, and mixtures thereof.

4. Waterproofing composition, according to any of claims 1 or 2, **characterized by** the fact that starch is chosen between native, chemically modified, enzymatically modified, and mixtures thereof.

5. Waterproofing composition, according to any of claims 1 or 2, **characterized by** the fact that the nanoclay is montmorillonite.

6. Waterproofing composition, according to one of claims 1 or 2, **characterized by** the fact that the binder polymer is chosen from among PVC, polyvinyl alcohol, polyamide, EVA (ethylene-vinyl acetate), polyvinyl butyral, polyacrylate vinyl and polylactic acid.

7. Waterproofing composition, according to claim 1, **characterized by** the fact that the non-aqueous solvent is chosen between methylethylketone, ethyl acetate, dioxolane and mixtures thereof.

8. Waterproofing composition, according to any of claims 1 or 2, **characterized by** the fact that the polymeric performance enhancer is chosen between casein derivatives, oxidized sucrose, acetic anhydride, maleic anhydride, carboxylic acids.

9. Waterproofing composition, according to claim 1, **characterized by** the fact that the surfactant is non-ionic, amphoteric or anionic.

10. Waterproofing composition, according to claim 1, **characterized by** the fact that the content of w/w in relation to the total weight of the formulation are: water 4-6%, nanoclay 7-11%, starch 15-17%, polymeric performance enhancer 2-5%, binder polymer 12-17%, surfactant 0.1-3.0%, non-aqueous solvent qsp 100%.

11. Waterproofing composition, according to claim 2, **characterized by** the fact that the content of w/w in relation to the total weight of the formulation are: water qsp 100. nanoclay 1-3%, starch 10-30%, polymeric performance enhancer 1-3%, binder polymer 10-30%, surfactant 10-30%.

12. Waterproofing composition, according to claim 1, **characterized by** the fact that the nanoclay is montmorillonite; the starch is acetylated starch; the polymeric performance enhancer is sodium caseinate, maleic anhydride, or mixtures thereof; the non-aqueous solvent is dioxolane; the binder polymer is polylactic acid or polyvinyl butyral; and the surfactant is a secondary alcohol ethoxylate.

13. Waterproofing composition, according to claim 2, **characterized by** the fact that the nanoclay is montmorillonite, the starch is acetylated starch, the polymeric performance enhancer is citric acid, the binding polymer is vinyl polyacrylate, and the surfactant is a lignosulfonate.

14. Process of preparation of waterproofing composition, described in any of claims 1 to 13, **characterized by** comprising the following steps:
- preparation of an aqueous phase or polar phase with nanoclay, starch and PPE;
- preparation of an apolar phase with binder polymer, polymeric performance enhancer, surfactant, non-aqueous solvent if the binder polymer is not pre-prepared in water, and optionally nanoclay;
- add the polar phase to the apolar phase and shake to achieve a single homogeneous phase.

15. Process of preparation of waterproofing composition, described in any of claims 1 to 13, **characterized by** a continuous sequence of mixing in hot water the components water, nanoclay, starch, and polymeric performance enhancer, cool to room temperature, then add the components polymeric performance enhancer, non-aqueous solvent if the binder polymer is not pre-prepared with water, binder polymer and surfactant, with agitation until obtaining homogeneous medium.

16. Process of preparation of waterproofing composition, according to claim 14 **characterized by** the fact that the proportion by weight between the polar phase components and the apolar phase components is 1:2.

17. Process of applying the waterproofing composition, described in any of claims 1 to 13, to a cellulosic substrate, **characterized by** the fact of applying a layer of substantially uniform of the composition to the substrate, particularly 3 to 15 g/m², more particularly from 7 to 10 g/m², value after drying.

18. Use of the waterproofing composition, described in any of claims 1 to 13, **characterized by** the fact that it is to obtain waterproofing of cellulosic substrates at WVTR values below 6 g/m².24 hours.

19. Product, **characterized by** being totally or partially waterproofed with waterproofing composition, according to any of claims 1 to 13.

20. Product, obtained in accordance with the process, of claim 15, **characterized by** being a blister packaging with a coated paper base with a composition in accordance with any of claims 1, 3 to 10 and 12, attached to a thermoformable polymer sheet.
